# EUROPÄISCHE PATENTSCHRIFT

(11) **EP 2 816 735 B1**
(45) Veröffentlichungstag und Bekanntmachung des Hinweises auf die Patenterteilung: **20.07.2016**
(21) Anmeldenummer: 14001829.2
(22) Anmeldetag: 26.05.2014
(51) Int. Cl.: H04B 3/56

(54) **Verfahren zur Steuerung einer Heizungsanlage mittels Powerline-Kommunikation mit einer Vielzahl von Dunkelstrahler-Einheiten sowie Anordnung zur Durchführung des Verfahrens**
Method for controlling a heating system with a plurality of dark radiator units by powerline communication and assembly for carrying out said method
Procédé de commande d'une installation de chauffage comprenant de nombreuses unités de radiateurs obscurs par communication par courant porteur, ainsi que dispositif d'exécution du procédé

(30) Priorität: 29.05.2013 DE 102013009119
(43) Veröffentlichungstag der Anmeldung: 24.12.2014
(73) Patentinhaber: Kübler GmbH, 67065 Ludwigshafen (DE)
(72) Erfinder: Kübler, Thomas, 68163 Mannheim (DE)
(74) Vertreter: Kesselhut, Wolf

(56) Entgegenhaltungen:
- EP-A2- 2 253 891
- DE-A1- 4 438 781
- US-A1- 2006 017 324

## Beschreibung

Die Erfindung betrifft ein Verfahren zur Steuerung einer Heizungsanlage mit einer Vielzahl von Dunkelstrahler-Einheiten sowie eine Anordnung zur Durchführung des Verfahrens gemäß dem Oberbegriff von Anspruch 1 und 9.

Heizungsanlagen zum Beheizen von großen Gebäuden, wie insbesondere Hallen, die eine Vielzahl von einzelnen Infrarotstrahlern, insbesondere Dunkelstrahlern, umfassen, werden seit langem von der Anmelderin vertrieben und sind darüber hinaus beispielsweise aus der DE 10 2007 047 661 A1 bekannt. Die Dunkelstrahler umfassen ein oberhalb eines zu beheizenden Bereichs des Gebäudes horizontal aufgehängtes, nach unten hin offenes Gehäuse, in welchem ein Strahlungsrohr aufgenommen ist, das durch einen Gasbrenner mit erhitztem Abgas beaufschlagt wird. Das andere Ende des Strahlungsrohres wird über ein Sauggebläse mit Unterdruck beaufschlagt und ist an eine Abgasleitung angeschlossen. Aufgrund der hierdurch erzeugten Temperatur der in der Regel schwarzen Außenseite des Strahlungsrohres im Bereich von 300 °C bis 750 °C strahlt dieses Infrarot-Strahlung nach Art eines schwarzen Körpers ab, welche zu einer direkten Erwärmung des Aufenthaltsbereich von Menschen unterhalb des Strahlungsrohres führt. Hierbei ist es gegenüber herkömmlichen Gebäude-Heizungen, bei denen Warmluftheizungen zum Einsatz gelangen, von Vorteil, dass in einem Gebäude lediglich die Oberflächen von Menschen, Tieren und Gegenständen durch die Infrarotstrahlung erwärmt werden, nicht jedoch das Luftvolumen innerhalb des Gebäudes. Da in diesem Falle keine Luft im Bodenbereich der Halle erwärmt wird, die anschließend nach oben steigt und im Aufenthaltsbereich der Personen nicht mehr als warme Luft zur Verfügung steht, arbeiten die beschriebenen Infrarotheizungen vergleichsweise ökonomisch und werden demgemäß bevorzugt zum Beheizen von Hallen eingesetzt.

Zur effizienten Beheizung von großen Gebäuden, wie beispielsweise Fabrikhallen, werden mehrere Infrarotstrahler mit ihren jeweils eigenen Brennereinheiten in unterschiedlichen Zonen in der zu beheizenden Halle aufgehängt und die jeweilige Brennereinheit oder auch mehrere Brennereinheiten in einer oder mehreren Zonen in Abhängigkeit von der jeweils gewünschten Temperatur ein- oder ausgeschaltet. Um bei den bekannten Hallenheizungen die jeweiligen Brennereinheiten in den gewünschten Zonen einzeln oder gruppenweise ein- oder ausschalten zu können, weist jeder Brenner eine Brenner-Steuerungseinheit auf, die mit einem selbständig arbeitenden Feuerungsautomaten verbunden ist, der das Ein- und Ausschalten der Gaszufuhr sowie das Zünden der Flamme selbständig steuert, wenn im Strahlungsrohr ein Unterdruck anliegt. Die Brenner-Steuerungseinheit aktiviert oder deaktiviert den Brenner dabei dadurch, dass sie diesen mit der Stromzuleitung verbindet oder die Stromzuleitung unterbricht.

Bei einer von der Anmelderin gefertigten Heizungsanlage wird dazu jede der Brenner-Steuerungseinheiten über eine Ring-Stromversorgungsleitung versorgt und ist mit einer zentralen Heizungssteuerung über eine Ringbus-Datenleitung verbunden, über die das Ein- und Ausschalten der jeweiligen Feuerungsautomaten der Brenner in Abhängigkeit von der gewünschten Temperatur zentral gesteuert wird.

Ein Problem stellt es hierbei dar, dass bei einem Ausfall der Brenner-Steuerungseinheit an einem Brenner die übrigen Brenner am Ende der Leitungskette allesamt ausfallen, da die zugehörigen Brenner-Steuerungseinheiten vom Ringbussystem nicht mehr angesteuert werden können und folglich die Feuerungsautomaten kein Einschaltsignal mehr von der zugehörigen Brenner-Steuerungseinheit erhalten.

Durch den Einsatz einer Ring-Stromversorgungsleitung in Verbindung mit einer Ringbus-Datenleitung ergibt sich weiterhin ein hoher Verkabelungsaufwand, insbesondere dann, wenn zwei Dunkelstrahler-Einheiten aufeinander gegenüberliegenden Seiten einer Halle mit der zentralen Steuerungseinrichtung über die Ring-Stromversorgungsleitung und die Ringbus-Datenleitung nacheinander verbunden werden müssen. In diesem Falle muss im Gegensatz zu einer Sternverkabelung eine Verbindungsleitung für den Strom und den Datenbus von einer Dunkelstrahler-Einheit auf der einen Seite der Halle zur Dunkel strahler-Einheit auf der gegenüberliegenden Seite der Halle verlegt werden. Hinzu kommt, dass sowohl die Stromversorgungsleitungen, als auch die Bus-Leitungen an jeder Brenner-Steuerungseinheit durchgeschleift werden müssen, wodurch sich die Anzahl an Kontaktstellen in nachteiliger Weise verdoppelt und die Gefahr von Störungen durch eine schlechte elektrische Leitungsverbindung entsprechend steigt.

Aus der US 2006/017324 A1 ist ein Netzwerk bekannt, welches elektronische Geräte über das bestehende Stromnetz miteinander verbindet. Die einzelnen Geräte weisen eine Sende- und Empfangseinheit, einen Stromanschluss, eine Koppelstation zum Ein- und Auskoppeln von Daten auf die Stromleitung und eine Verarbeitungseinheit auf. Dieses System ermöglicht es, die Thermostate und weitere Messdatenerfassungseinheiten einer Heizungsanlage mit nur einer Stromzuleitung gleichzeitig an ein Datennetz zur Heizungsanlagensteuerung anzuschließen und mit Strom zu versorgen. Die in dem System verwendeten hochfrequenten Sende- und Empfangseinheiten eignen sich jedoch nicht für den Betrieb an Versorgungsleitungen von Befeuerungsautomaten, da es aufgrund der hohen Störaussendung während des Zündens der Brenner zu Störungen in der Datenübertragung kommt.

Aus dem Dokument DE 44 38 781 A1 ist ein Informationssystem beispielsweise zur Ortung von Personen in und im Umfeld von Gebäuden bekannt, welches die Informationen der Sensoreinheiten über das Stromnetz an eine Zentrale übermittelt.

Demgemäß ist es eine Aufgabe der vorliegenden Erfindung, ein Verfahren zu schaffen, mit welchem sich eine Heizungsanlage mit einer Vielzahl von Dunkelstrahler-Einheiten mit einem verringerten Verkabelungsaufwand zuverlässig von einem zentralen Schaltschrank aus steuern lässt. Eine weitere Aufgabe der Erfindung ist es, eine Anordnung zur Durchführung des Verfahrens zu schaffen.

Diese Aufgabe wird erfindungsgemäß durch ein Verfahren und eine Anordnung mit den Merkmalen von Anspruch 1 und 9 gelöst.

Weitere Merkmale der Erfindung sind in den Unteransprüchen beschrieben.

Gemäß der Erfindung zeichnet sich ein Verfahren zur Steuerung einer Heizungsanordnung mit einer Vielzahl von Dunkelstrahler-Einheiten, von denen eine jede Dunkelstrahler-Einheit ein Strahlungsrohr umfasst, das durch einen Brenner mit heißem Abgas beaufschlagbar ist, wobei jeder Brenner eine eigene, über eine Stromzuleitung mit elektrischer Energie versorgbare Brenner-Steuerungseinheit besitzt, welche zum Ein- und Ausschalten des Brenners mit einer zentralen Steuerungseinrichtung über einen Datenbus gekoppelt ist, dadurch aus, dass die Stromzuleitungen zur Versorgung der Brenner-Steuerungseinheiten über einen gemeinsamen 50 Hz Wechselstromanschluss gespeist werden, und dass die Steuersignale zur Ansteuerung einer jeden Brenner-Steuerungseinheit von der zentralen Steuerungseinrichtung als Mittelfrequenz-Datensignale mit Frequenzen im Bereich von 90 bis 150 KHz über die Stromzuleitungen zu den Brenner-Steuerungseinheiten übertragen werden.

Durch die Erfindung ergibt sich der Vorteil, dass zwischen der zentralen Steuerungseinrichtung und den Brenner-Steuerungseinheiten der Dunkelstrahler bei einem minimalen Verkabelungsaufwand die Datenübertragung lediglich über das nicht abgeschirmte, bevorzugt vier- oder fünfadrige Stromkabel, über welches die Brenner, bzw. die Brenner-Steuerungseinrichtungen versorgt wird, erfolgt. Hierbei hat es sich in Versuchen der Anmelderin gezeigt, dass durch den erfindungsgemäß gewählten Mittelfrequenzbereich von 90 bis 150 KHz, insbesondere den Bereich zwischen 100 und 110 KHz, in Verbindung mit dem Anschluss sämtlicher Brenner-Steuerungseinheiten und der zentralen Steuerungseinheit an einen gemeinsamen Wechselstromanschluss mit 50 Hz eine hinreichende Übertragungsqualität erhalten werden kann, die ausreicht, die Heizungsanordnung trotz der beim Ein- oder Aus schalten der Brenner infolge der eingesetzten Zündspannungen entstehenden Störimpulse zuverlässig zu steuern.

Wie Versuche gezeigt haben, ist dies bei dem erfindungsgemäßen Frequenzbereich zwischen 90 bis 150 KHz, insbesondere zwischen 100 und 110 KHz im Gegensatz zu einer Übertragung über ein Breitband-Powerlinesystem mit Frequenzen im Bereich von mehreren MHz mit der geforderten Störsicherheit überhaupt erst möglich.

Durch den geringen Verkabelungsaufwand ergibt sich weiterhin der Vorteil, dass sich nicht nur die Installationszeiten und Kosten reduzieren, sondern zudem die Gefahr von Installationsfehlern, die mit der Anzahl der verlegten Leitungen zunehmen, ebenso reduziert wird. Hierbei ist es gegenüber den bekannten abgeschirmten Ringbus-Datenleitungen von besonderem Vorteil, dass die herkömmlichen Stromleitungen keine Abschirmung besitzen, die insbesondere an den Anschlusspunkten zu den Brenner-Steuerungseinheiten mit einer hohen Sorgfalt verlegt werden müssen, um die Einkopplung von Störsignalen wirksam und zuverlässig zu verhindern.

Bei der bevorzugten Ausführungsform ist die zentrale Steuerungseinrichtung insbesondere über eine Datenschnittstelle, bevorzugt eine RS485 Schnittstelle, mit einem ersten Modem gekoppelt, welches die Mittelfrequenzdatensignale, welche von der zentralen Steuerungseinheit erzeugt werden, bevorzugt in Form von Spannungen im Bereich von z.B. ± 1 bis 1,5 Volt kapazitiv in wenigstens eine der Stromzuleitungen zu den Brenner-Steuerungseinheiten einkoppelt. Bei dieser Ausführungsform der Erfindung besitzt jede der Brenner-Steuerungseinheiten ein jeweils eigenes weiteres Modem, über welches die Mittelfrequenz-Datensignale wieder selektiv von der jeweiligen Brenner-Steuerungseinheit aus der Stromzuleitung ausgekoppelt und der entsprechenden Brenner-Steuerungseinheit zugeführt werden. Die dabei eingesetzte Technologie für die Übertragung der Daten entspricht dabei der bekannten Powerline-Datenübertragungstechnik.

Sowohl die zentrale Steuerungseinrichtung, als auch die Brenner-Steuerungseinheiten umfassen bevorzugt jeweils einen bekannten Mikrocontroller, welcher die dem ersten Modem von der zentralen Steuerungseinrichtung zugeführten, als auch von den weiteren Modems den jeweiligen Brennersteuerungseinheiten zugeführten Datensignale verarbeitet, um den Feuerungsautomaten des Brenners mit Strom zu versorgen, welcher die entsprechenden Stellglieder, wie beispielsweise Relais, Magnetventile und elektronische Schalter etc. enthält, die den jeweiligen Brenner ein- oder ausschalten.

Sowohl das erste Modem, als auch die weiteren Modems umfassen vereinfacht ausgedrückt eine Kapazität/Kondensator, welcher mit der Stromzuleitung des 50 Hz - Wechselspannungsnetzes, über welches die zentrale Steuerungseinrichtung und die Brenner-Steuerungseinheit miteinander verbunden sind, verbunden ist. Die Mittelfrequenzdatensignale werden dabei bevorzugt als Spannungs-Signale mit einem Pegel von beispielsweise 1 Volt oder 1,5 Volt auf die Phase des 50 Hz-Wechselstroms aufmoduliert, der bevorzugt ein Spannung im Bereich von 230 Volt besitzt. Der Nullleiter stellt bei dieser Ausführungsform der Erfindung den entsprechenden anderen Bezugspunkt/Anschlusspunkt für das aufmodulierte Signal dar. Um beim Einsatz einer größeren Zahl von Dunkelstrahler-Einheiten, insbesondere bei mehr als 10 Einheiten, eine zuverlässige und störungsfreie Übertragung der Datensignale zu gewährleisten, kann es gemäß einer weiteren Ausführungsform der Erfindung zur Erhöhung der Kommunikationsbandbreite vorgesehen sein, anstelle der die 230 V Wechselspannung führenden Phase der Stromzuleitung eine nicht abgeschirmte zusätzliche Ader der Stromzuleitung heranzuziehen, die keine Wechselspannung führt und nachfolgend als Leerader bezeichnet wird. Hierdurch ergibt sich der Vorteil, dass die Störimpulse von weiteren Modems, die sich in einem benachbarten Stromleitungsnetz befinden, und deren Signale über entsprechende kostengünstige elektronische Standardfilter nicht hinreichend vom 50 Hz Wechselspannungsanschluss abgeschirmt werden können, die Datenübertragung nicht beeinflussen, da die Nulleiter und Phasen der Modems in diesem Falle zwar miteinander verbunden sind, zwischen den Leeradern jedoch auch beim Einsatz von zwei, drei oder auch mehr Modems, die von der zentralen Steuerungseinrichtung zur Übertragung der Daten verbunden sind, eine galvanische Trennung besteht.

Bei der bevorzugten Ausführungsform der Erfindung ist es weiterhin vorgesehen, dass bei sehr großen Heizungsanlagen mit mehr als 10 Dunkelstrahler-Einheiten, jeweils bis zu 10 Einheiten über eine eigene Leerader und ein eigenes erstes Modem als eigener Leitungsstrang von der zentralen Steuerungseinrichtung angesteuert werden, um eine hinreichende Übertragungsbandbreite zu gewährleisten und die Gefahr von Störungen so weit wie nötig zu verringern. Die Leerader wird dabei gemeinsam mit der spannungsführenden Phase und dem Nullleiter des 50 Hz Wechselstroms, sowie ggf. dem Erdleiter in ein und demselben Stromzuleitungskabel geführt, welches erfindungsgemäß zur Verringerung der Kosten keine Abschirmung gegen elektromagnetische Strahlung aufweist.

Durch die Ansteuerung der Dunkelstrahler-Einheiten in getrennten Gruppen über separate Leitungsstränge des 50 Hz Stromnetzes, die jeweils durch ein eigenes erstes Modem, das seine Mittelfrequenz-Datensignale in den Nulleiter und die Leerleitung der entsprechenden Stromzuleitung des jeweiligen Leitungsstrangs einkoppelt, mit der zentralen Steuerungseinrichtung zum Datenaustausch verbunden sind, ergibt sich der Vorteil, dass die Datensignale des einen Leitungsstrangs aufgrund der galvanischen Trennung zwischen den Leeradern nicht in den zweiten und ggf. weitere Leitungsstränge eingekoppelt werden. Hierdurch verbessert sich die Übertragungsqualität ganz erheblich, was es überhaupt erst ermöglicht, zwei oder mehrere Gruppen mit bis zu jeweils 10 Dunkelstrahler-Einheiten gleichzeitig mit der erforderlichen Zuverlässigkeit über die jeweiligen Stromzuleitungen durch eine zentrale Steuerungseinrichtung zu betreiben. Da die Leerader in den üblicherweise eingesetzten Stromzuleitungen, über die die Brenner-Steuerungseinheiten mit elektrischem Strom versorgt werden, bereits enthalten ist, bzw. mit geringsten Mehrkosten bereit gestellt werden kann, können durch diese Ausführungsform der Erfindung auch sehr große Hallen mit z.B. bis zu 100 Dunkelstrahler-Einheiten in vorteilhafter Weise zentral über eine einzige zentrale Steuerungseinrichtung gesteuert werden.

Nach einem weiteren der Erfindung zugrunde liegenden Gedanken enthält jede der Brenner-Steuerungseinheiten eine Brenner-Identifikationsnummer, die bevorzugt in Form einer individuellen Seriennummer in einem digitalen Festwertspeicher, insbesondere einem Eprom, der Brenner-Steuerungseinheit abgelegt ist. Um bei einer Vielzahl von Dunkelstrahler-Einheiten sicherzustellen, dass der richtige Brenner ein- oder ausgeschaltet wird, ist es hierbei vorgesehen, dass die Brenner- Steuerungseinheiten und/oder weiteren Modems die von der zentralen Steuerungseinrichtung erzeugten Mittelfrequenz-Datensignale anhand der Brenner-Identifikationsparameter selektieren, um aus den Mittelfrequenz-Datensignalen die für sie bestimmten Mittelfrequenz-Signale herauszufiltern, welche die entsprechenden Informationen zum Ein- oder Ausschalten des Brenners etc. enthalten.

Als besonders vorteilhaft hat es sich hierbei herausgestellt, wenn der Brenner-Identifikationsparameter aus dem Speicher bei einem erstmaligen Anschluss einer Brenner-Steuerungseinheit an die zentrale Steuerungseinrichtung selbständig ausgelesen und über das weitere Modem und die Stromzuleitung zum ersten Modem der zentralen Steuerungseinrichtung übertragen wird, und von dort aus als Datensignal durch den Mikrocontroller der zentralen Steuerungseinrichtung ausgelesen wird, um über eine entsprechende Datenverarbeitungssoftware die jeweilige Brenner-Steuerungseinheit, bevorzugt mit der zugehörigen Seriennummer, als aktives Bauteil zu initialisieren und beispielsweise auf einem Display anzuzeigen.

Bei der bevorzugten Ausführungsform des erfindungsgemäßen Verfahrens ist es weiterhin vorgesehen, dass jede der Brenner-Steuerungseinheiten eine Erfassungseinrichtung zum Erfassen eines oder mehrerer Brenner-Betriebszustandsparameter des zugehörigen Brenners umfasst. Die Brenner-Betriebszustandsparameter werden in diesem Falle zusammen mit dem zugehörigen Brenner-Identifikationsparameter, d.h. insbesondere der Seriennummer der zugehörigen Brenner-Steuerungseinheit, über die Stromzuleitungen als Mittelfrequenz-Datensignale an die zentrale Steuerungseinrichtung übersandt. Hierdurch ergibt sich der Vorteil, dass der aktuelle Betriebszustand des Brenners von der zentralen Steuerungseinrichtung in vorgegebenen Zeitabständen, beispielsweise alle 1 - 10 Sekunden, erfasst und einer oder mehrere der übertragenen Brenner-Betriebszustandsparameter auf einem Display angezeigt und/oder mit einem vorgegebenen Sollwert verglichen werden kann.

Bei der bevorzugten Ausführungsform der Erfindung umfassen die Brenner-Betriebszustandsparameter, insbesondere den Ionisationsstrom der Ionisationselektrode, der über einen entsprechenden Sensor gemessen wird, sowie bevorzugt auch den momentanen Schaltungszustand eines Differenzdruckschalters, der den Unterdruck in der Brennkammer des Brenners erfasst. Gleichzeitig oder alternativ wird auch der Schaltungszustand des Ventils erfasst, über welches die Zufuhr des Brennstoffs in den Brenner freigegeben wird. Bei Letzterem handelt es sich bevorzugt im einfachsten Falle um ein Gasmagnetventil, welches durch Anlegen einer vom Feuerungsautomat erzeugten Spannung geöffnet bzw. geschlossen wird, wenn bestimmte Vorraussetzungen im Brenner gegeben sind.

Schließlich kann es bei der zuletzt beschriebenen Ausführungsform des erfindungsgemäßen Verfahrens vorgesehen sein, dass die erfassten Brenner-Betriebszustandsparameter über eine mit der zentralen Steuerungseinrichtung verbundene Datenschnittstelle, insbesondere eine RS485 Schnittstelle, über ein externes Datennetzwerk oder ein Telefonnetzwerk, über einen externen Rechner zum Zwecke der Fernwartung abfragbar sind.

Hierdurch ergibt sich der Vorteil, dass der Wartungszustand eines Brenners oder eine Störung in einem Brenner vom Hersteller der Hallenheizung auch dann beurteilt werden kann, wenn gerade kein Monteur vor Ort ist. Zudem ist es im Falle einer Störung, wie z.B. einer defekten Ionisationselektrode, nicht mehr erforderlich, dass sich der Betreiber der Hallenheizung zunächst einmal einen direkten Zugang zu der betroffenen Dunkelstrahler-Einheit verschafft, um festzustellen, welche Bauteile überhaupt betroffen sind. Da sich die Dunkelstrahler-Einheiten mit den Brennern bei größeren Hallen üblicher Weise mehrere Meter über dem Boden befinden, entfällt dadurch die Notwendigkeit des Einsatzes einer Hebebühne. Ein weiterer Vorteil besteht darin, dass es beispielsweise bei einem Defekt an der Ionisationselektrode, der durch Messen des Ionisationsstroms beim Anlegen einer vorgegebenen Spannung ermittelt werden kann, ohne einen direkten Zugang zum Brenner möglich ist, das entsprechende Ersatzteil, in diesem Fall die Ionisationselektrode, im Vorfeld zu beschaffen und bei einem Einsatz vor Ort gezielt auszutauschen. Durch Messen des Ionisationsstroms, der sich aufgrund einer altersbedingten Erhöhung des Innenwiderstands der Ionisationselektrode über die Zeit hinweg bei einer vorgegebenen angelegten Spannung verringert, eröffnet sich die Möglichkeit, den Wartungszustand der Ionisationselektrode von einem externen Rechner aus, insbesondere beim Hersteller, zu beurteilen und frühzeitig vor einem Ausfall der Ionisationselektrode einen entsprechenden Austausch vorzunehmen.

Ebenso ist es möglich, durch das Erfassen des Schaltens eines Differenzdruckschalters, der in der Brennkammer angeordnet ist und der nachfolgend auch als Unterdruckdose oder Druckdose bezeichnet wird, zu beurteilen, ob ein ausreichender Unterdruck in der Brennkammer vorliegt, was bedeutet, dass ausreichend Verbrennungsluft in die Brennkammer eingesaugt wird. Wird von der zentralen Steuerungseinrichtung bzw. durch den externen Rechner festgestellt, dass sich beim Ausfall eines Brenners aufgrund eines fehlenden Unterdrucksignals des Differenzdruckschalters nicht ausreichend Verbrennungsluft in der Brennkammer befindet, so bedeutet dies, dass entweder die Unterdruckdose defekt ist oder aber das Sauggebläse zum Einsaugen der Frischluft nicht funktioniert, wobei Letzteres in diesem Falle nicht abgefragt wird.

Die Erfindung wird nachfolgend am Beispiel einer bevorzugten Ausführungsform einer erfindungsgemäßen Anordnung zur Durchführung des Verfahrens anhand von Zeichnungen beschrieben.

In der Zeichnung zeigt:

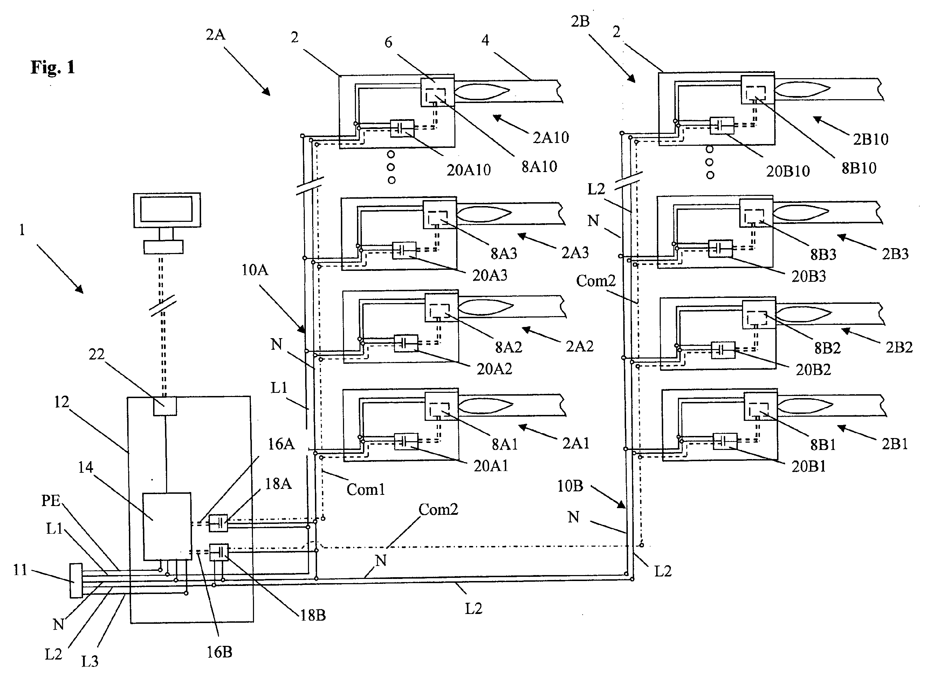

- Fig. 1: eine schematisierte Ansicht einer bevorzugten Ausführungsform der erfindungsgemäßen Anordnung mit zwei Gruppen von Dunkelstrahler-Einheiten, die über eine zentrale Steuerungseinrichtung angesteuert werden.

Wie in Fig. 1 gezeigt ist, umfasst eine erfindungsgemäße Anordnung 1 zur Durchführung des zuvor beschriebenen Verfahrens eine Vielzahl von Dunkelstrahler-Einheiten 2, die bei der beispielhaft gezeigten Ausführungsform in zwei Gruppen 2A und 2B angeordnet sind. Jede der beiden Gruppen 2A und 2B umfasst dabei bis zu 10 einzelne Dunkelstrahler-Einheiten, von denen jeweils nur die ersten drei Einheiten 2A1, 2A2 und 2A3 sowie die zehnte Einheit 2A10 der ersten Gruppe 2A und die ersten drei Einheiten 2B1, 2B2 und 2B3 sowie die zehnte Einheit 2B10 der zweiten Gruppe beispielhaft gezeigt sind.

Jede der einzelnen Dunkelstrahler-Einheiten 2A1 bis 2A10 und 2B1 bis 2B10 weist ein Strahlungsrohr 4 und einen Brenner 6 auf, der das Strahlungsrohr 4 in bekannter Weise mit heißem Abgas beaufschlagt, welches bei der Verbrennung eines nicht näher gezeigten zugeführten gasförmigen Brennstoffs entsteht. Jedem Brenner 6 der ersten und zweiten Gruppe 2A, 2B von Dunkelstrahler-Einheiten 2 ist eine eigene Brenner-Steuerungseinheit 8A1 bis 8A10; bzw. 8B1 bis 8B10 zugeordnet, die über eine jeweilige Stromzuleitung 10A, 10B von einem gemeinsamen 50 Hz Wechselstromanschluss 11 mit elektrischer Energie, in diesem Falle Wechselstrom mit einer Spannung im Bereich von ca. 230V, versorgt wird. Der Wechselstromanschluss, auf den nachfolgend noch genauer eingegangen wird, umfasst dabei den Nullleiter N und eine der stromführenden Phasen L1, L2 oder L3 eines Drehstromanschlusses 11, sowie ggf. den Schutzleiter PE, der in den Zeichnungen jedoch der Übersichtlichkeit halber nicht durchweg gezeigt ist.

Wie der Darstellung der Fig. 1 weiterhin entnommen werden kann, umfasst die erfindungsgemäße Anordnung 1 weiterhin einen Schaltschrank 12, in dem sich eine zentrale Steuerungseinrichtung 14 befindet, und der durch einen 380V Drehstromanschluss 11 über die drei Phasen L1, L2 und L3, sowie den Nullleiter N und den Schutzleiter PE mit elektrischer Energie versorgt wird.

Die zentrale Steuerungseinrichtung 14, die die Steuerungssignale zum Ein- und Ausschalten der Brenner-Steuerungseinheiten 8A1 bis 8A10; bzw. 8B1 bis 8B10 erzeugt, ist über eine Datenleitung 16A und 16B mit einem jeweiligen ersten Modem 18A, 18B verbunden, welches die von der zentralen Steuerungseinrichtung zur Steuerung der Brenner-Steuerungseinheiten 8A1 bis 8A10; bzw. 8B1 bis 8B10 generierten Steuerungssignale als Mittelfrequenz-Datensignale mit Frequenzen im Bereich von insbesondere 90 bis 150 kHz in wenigstens eine der Stromzuleitungen 10A, 10B bevorzugt kapazitiv einkoppelt. Jede der Brenner-Steuerungseinheiten 8A1 bis 8A10 der ersten Gruppe 2A und Brenner-Steuerungseinheiten 8B1 bis 8B10 der zweiten Gruppe 2B von Dunkelstrahler-Einheiten 2 besitzt ein eigenes weiteres Modem 20A1 bis 20A10, bzw. 20B2 bis 20B10, welches vorzugsweise auf der Elektronikplatine der betreffenden Brenner-Steuerungseinheit angeordnet ist, und über welches die Mittelfrequenz-Datensignale der ersten Modems 18A, 18B selektiv aus der jeweiligen Stromzuleitung 10A, 10B ausgekoppelt und der entsprechenden Brenner-Steuerungseinheit 8B1 bis 8B10; bzw. 8B1 bis 8B10 zugeführt werden.

Jede der Brenner-Steuerungseinheiten 8A1 bis 8A10; bzw. 8B1 bis 8B10 weist bevorzugt eine Erfassungseinrichtung zum Erfassen eines oder mehrerer Brenner-Betriebszustandsparameter des zugehörigen Brenners 6 auf, die über das jeweilige weitere Modem 20A1 bis 20A10, bzw. 20B1 bis 20B10 als Mittelfrequenz-Datensignale in die entsprechende Stromzuleitung 10A, 10B der ersten oder zweiten Gruppe 2A bzw. 2B von Dunkelstrahler-Einheiten 2A1 bis 2A10 und 2B1 bis 2B10 eingekoppelt und über diese zusammen mit dem Brenner-Identifikationsparameter des zugehörigen Brenners 6 an das erste Modem 18A, 18B übersandt, welches die Datensignale aus der Stromzuleitung 16A, bzw. 16B auskoppelt und an die zentrale Steuerungseinrichtung 14 überträgt.

Die Erfassungseinrichtung umfasst bevorzugt eine nicht näher gezeigte Anordnung zum Messen des Ionisationsstroms einer Ionisationselektrode, welche in der Brennkammer enthalten ist und durch die Flamme des Brenners 6 beaufschlagt wird. Um beim Messen des Ionisationsstroms eine Beeinflussung des Feuerungsautomaten auszuschließen, der aus sicherheitstechnischen Gründen eine abgeschlossene Einheit darstellt, an der von außen her keine Veränderungen vorgenommen werden dürfen, erfolgt die Messung unmittelbar nach dem Abschalten des Feuerungsautomaten und Unterbrechen der Leitungsverbindung zwischen der Ionisationselektrode und dem abgeschalteten Feuerungsautomaten, insbesondere durch ein Relais.

Die Erfassungseinrichtung liest weiterhin aus dem Feuerungsautomaten aus, ob der Differenzdruckschalter geschaltet hat und das Gasmagnetventil des Brenners geöffnet ist. Aus den erfassten Werten für den Ionisationsstrom, den Schaltzustand des Differenzdruckschalters sowie auch dem Schaltungszustand des Gasmagnetventils, die vor der Übersendung an das weitere Modem 20A1 bis 20A10, bzw. 20B2 bis 20B10 vorzugsweise durch einen Analog-Zu-Digitalwandler der jeweiligen Brenner-Steuerungseinheit 8B1 bis 8B10; bzw. 8B1 bis 8B10 in einen digitalen Wert umgewandelt werden, lassen sich in der zentralen Steuerungseinrichtung 14 Rückschlüsse auf den Betriebszustand, bzw. den Wartungszustand der jeweiligen Dunkelstrahler-Einheit 2 ziehen, welche insbesondere im Falle einer Störung eine schnelle Lokalisierung der Störungsursache ermöglichen. Diese kann durch die zentrale Steuerungseinrichtung 14 grafisch auf einem nicht näher gezeigten Display des Schaltschranks 12 angezeigt werden.

Um beim Betrieb der erfindungsgemäßen Anordnung 1 ein Übersprechen zwischen den Mittelfrequenz-Datensignalen, welche über die erste Stromzuleitung 10A und die zweite Stromzuleitung 10B übertragen werden, soweit wie möglich zu reduzieren, wird bei der bevorzugten Ausführungsform der Schaltschrank 12, bzw. die zentrale Steuerungseinrichtung 14 durch den Nullleiter N, den Schutzleiter PE sowie die drei stromführenden Phasen L1, L2 und L3 gespeist, wohingegen das Modem 10A, welches die erste Gruppe 2A von Dunkelstrahler-Einheiten 2A1 bis 2A10 versorgt, über den gemeinsamen Nullleiter N sowie lediglich eine der Phasen L1 des Drehstromanschlusses mit elektrischer Energie gespeist wird. Demgegenüber erfolgt die Stromversorgung des zweiten ersten Modems 10B welches der zweiten Gruppe von Dunkelstrahler-Einheiten 2B1 bis 2B10 zugeordnet ist, ausschließlich durch den Nullleiter N und die eine der anderen beiden stromführenden Phasen L2 des 380V/50 Hz Drehstromanschlusses 11, wobei die Gehäuse des Schaltschranks 12, bzw. der jeweiligen Modems 18A, 18B und/oder Dunkelstrahler-Einheiten 2A1 bis 2A10, bzw. 2B1 bis 2B10 bekanntermaßen noch mit dem Schutzleiter PE verbunden sein können. Hierdurch wird zwischen dem Nullleiter N und der stromführenden Phase L1 der ersten Stromzuleitung 10A sowie dem Nullleiter N und der stromführenden Phase L2 der zweiten Stromzuleitung 10B, über welche die zweite Gruppe 2B von Dunkelstrahler-Einheiten versorgt wird, bei einer vorteilhaften galvanischen Trennung der Stromversorgung der beiden Modems 18A, 18B eine Spannung von ca. 230 V und 50 Hz bereit gestellt.

Wie in der Darstellung der Fig. 1 weiterhin durch die strichpunktierten Linien angedeutet ist, erfolgt die Übertragung der Mittelfrequenz-Datensignale bei der bevorzugten Ausführungsform der Erfindung über den gemeinsamen Nullleiter N sowie eine erste Leerader Com1 und eine zweite Leerader Com2, die neben der dem Nullleiter N, der jeweiligen stromführenden Phase L1, bzw. L2 sowie ggf. auch dem Schutzleiter PE in den getrennten Stromzuleitungen 10A und 10B zur separaten Versorgung und Ansteuerung der ersten und zweiten Gruppe 2A und 2B von Dunkelstrahler-Einheiten 2 als zusätzliche elektrisch leitende Adern enthalten sind.

Schließlich kann die zentrale Steuerungseinrichtung 14 zum Datenaustausch mit einer Datenschnittstelle 22, insbesondere einer RS 485 Schnittstelle, gekoppelt sein. Über diese Schnittstelle 22 kann eine Datenverbindung zu einem externen Rechner 24 hergestellt werde, bzw. können weitere Datenbussysteme von bereits zuvor installierten älteren Dunkelstrahler-Anordnungen durch die zentrale Steuerungseinrichtung angesteuert werden, welche in der Fig. 1 nicht dargestellt sind.

### Bezugszeichenliste

- 1: erfindungsgemäße Anordnung
- 2: Dunkel strahler-Einheit
- 2A: erste Gruppe von Dunkel strahler-Einheiten
- 2B: zweite Gruppe von Dunkelstrahler-Einheiten
- 2A1 - 2A10: erste bis zehnte Dunkelstrahler-Einheit der ersten Gruppe von Dunkelstrahler-Einheiten
- 2B1 - 2B10: erste bis zehnte Dunkelstrahler-Einheit der zweiten Gruppe von Dunkelstrahler-Einheiten
- 4: Strahlungsrohr
- 6: Brenner
- 8A1 - 8A 10: Brenner-Steuerungseinheiten der ersten Gruppe von Dunkelstrahler-Einheiten
- 8B1 - 8B 10: Brenner-Steuerungseinheiten der zweiten Gruppe von Dunkelstrahler-Einheiten
- 10A: erste Stromzuleitung zur Versorgung der ersten Gruppe von Dunkelstrahler-Einheiten
- 10B: zweite Stromzuleitung zur Versorgung der zweiten Gruppe von Dunkelstrahler-Einheiten
- 11: 50 Hz Drehstromanschluss
- 12: Schaltschrank
- 14: zentrale Steuerungseinrichtung
- 16A: erste Datenleitung
- 16B: zweite Datenleitung
- 18A: erstes Modem an zentraler Steuerungseinrichtung
- 18B: zweites Modem an zentraler Steuerungseinrichtung
- 20A1 - 20A10: weitere Modems an Dunkelstrahler-Einheiten der erste Gruppe von Dunkelstrahlern
- 20B1 - 20B10: weitere Modems an Dunkelstrahler-Einheiten der zweiten Gruppe von Dunkelstrahlern
- 22: Datenschnittstelle
- L1: erste stromführende Phase
- L2: erste stromführende Phase
- L3: erste stromführende Phase
- N: Nullleiter
- PE: Schutzleiter
- Com1: Leerader in erster Stromzuleitung zur Übertragung der Datensignale an die erste Gruppe von Dunkelstrahler-Einheiten
- Com2: Leerader in zweiter Stromzuleitung zur Übertragung der Datensignale an die zweite Gruppe von Dunkelstrahler-Einheiten

## Patentansprüche

1. Verfahren zur Steuerung einer Heizungsanordnung (1) mit einer Vielzahl von Dunkelstrahler-Einheiten (2, 2A1 bis 2A10 , 2B1 bis 2B10), von denen eine jede Dunkelstrahler-Einheit (2A1 bis 2A10 , 2B1 bis 2B10) ein Strahlungsrohr (4) umfasst, das durch einen Brenner (6) mit Heißgas beaufschlagbar ist, wobei jeder Brenner (6) eine eigene, über eine Stromzuleitung (10A, 10B) mit elektrischer Energie versorgbare Brenner-Steuerungseinheit (8A1 bis 8A10, 8B1 bis 8B10) besitzt, welche zum Ein- und Ausschalten des Brenners (6) mit einer zentralen Steuerungseinrichtung (14) über einen Datenbus gekoppelt ist,
**dadurch gekennzeichnet,**
**dass** die Stromzuleitungen (10A, 10B) zur Versorgung der Brenner-Steuerungseinheiten (8A1 bis 8A10, 8B1 bis 8B10) über einen gemeinsamen 50 Hz Wechselstromanschluss (11) gespeist werden, und dass die Steuersignale zur Ansteuerung einer jeden Brenner-Steuerungseinheit (8A1 bis 8A10, 8B1 bis 8B10) von der zentralen Steuerungseinrichtung (14) als Mittelfrequenz-Datensignale mit Frequenzen im Bereich von 90 bis 150 kHz über die Stromzuleitungen (10A, 10B) zu den Brenner-Steuerungseinheiten übertragen werden, wobei die zentrale Steuerungseinrichtung (14) die Datensignale zur Steuerung der Brenner-Steuerungseinheit (8A1 bis 8A10, 8B1 bis 8B10) über ein erstes Modem (18A, 18B) in wenigstens eine der Stromzuleitungen (10A, 10B) einkoppelt, und dass jede der Brenner-Steuerungseinheiten (8A1 bis 8A10, 8B1 bis 8B10) ein eigenes weiteres Modem (20A1 bis 20A10, 20B1 bis 20B10) umfasst, über welches die Mittelfrequenz-Datensignale selektiv aus der Stromzuleitung (10A,10B) ausgekoppelt und der jeweiligen Brenner-Steuerungseinheit (8A1 bis 8A10, 8B1 bis 8B10) zugeführt werden.

2. Verfahren nach Anspruch 1,
**dadurch gekennzeichnet,**
**dass** die Mittelfrequenz-Datensignale in den Nullleiter (N) und eine nicht stromführende Ader (Com1, Com2) der von der zentralen Steuerungseinrichtung (14) zu den Brenner-Steuerungseinheiten (8A1 bis 8A10, 8B1 bis 8B10) führenden Stromzuleitung (10A, 10B) eingekoppelt werden.

3. Verfahren nach Anspruch 2,
**dadurch gekennzeichnet,**
**dass** zwei oder mehr Gruppen (2A, 2B) von bis zu 10 Brenner-Steuerungseinheiten (8A1 bis 8A10, 8B1 bis 8B10) über einen Leitungsstrang mit dem 50 Hz Wechselspannungsanschluss verbunden sind, und dass jede Gruppe (2A, 2B) separat durch ein mit der zentralen Steuerungseinrichtung (14) verbundenes eigenes erstes Modem (18A, 18B) angesteuert wird, welches die Mittelfrequenz-Datensignale in den Nullleiter (N) und die nicht stromführende Ader (Com1, Com2) des jeweiligen Leitungsstrangs einkoppelt.

4. Verfahren nach einem der Ansprüche 1 bis 3,
**dadurch gekennzeichnet,dass**
jeder der Brenner-Steuerungseinheiten (8A1 bis 8A10, 8B1 bis 8B10) ein Brenner-Identifikationsparameter zugeordnet ist, und dass die Brenner-Steuerungseinheiten und/oder weiteren Modems (20A1 bis 20A10, 20B1bis 20B10) die von der zentralen Steuerungseinrichtung (14) erzeugten Mittelfrequenz-Datensignale anhand der Brenner-Identifikationsparameter selektieren, um aus den Mittelfrequenz-Datensignalen die für sie bestimmten Mittelfrequenz-Datensignale herauszufiltern.

5. Verfahren nach Anspruch 4,
**dadurch gekennzeichnet,dass**
der Brenner-Identifikationsparameter eine in einem Speicher der Brenner-Steuerungseinheit (8A1 bis 8A10, 8B1 bis 8B10) abgelegte Seriennummer umfasst, die bei einem erstmaligen Anschluss der Brenner-Steuerungseinheit an die zentrale Steuerungseinrichtung (14) selbständig an die zentrale Steuerungseinrichtung übersandt wird.

6. Verfahren nach einem der vorhergehenden Ansprüche,
**dadurch gekennzeichnet,**
**dass** jede der Brenner-Steuerungseinheiten (8A1 bis 8A10, 8B1 bis 8B10) eine Erfassungseinrichtung zum Erfassen eines oder mehrerer Brenner-Betriebszustandsparameter des zugehörigen Brenners umfasst, und dass die Brenner-Betriebszustandsparameter einer jeden Brenner-Steuerungseinheit (8A1 bis 8A10, 8B1 bis 8B10) zusammen mit dem zugehörigen Brenner-Identifikations-parameter der zugehörigen Brenner-Steuerungseinheit (8A1 bis 8A10, 8B1 bis 8B10) über die Stromzuleitungen (10A, 10B) als Mittelfrequenz-Datensignale an die zentrale Steuerungseinrichtung (14) übersandt werden und dass die von einer Brenner-Steuerungseinheit ((8A1 bis 8A10, 8B1 bis 8B10) erfassten Brenner-Betriebszustandsparameter zusammen mit den zugehörigen Brenner-Identifikationsparametern über das der Brenner-Steuerungseinheit ((8A1 bis 8A10, 8B1 bis 8B10) zugeordnete weitere Modem (20A1 bis 20A10, 20B1 bis 20B10) in die die Brenner-Steuerungseinheit (8A1 bis 8A10, 8B1 bis 8B10) mit Strom versorgende Stromzuleitung (10A, 10B) eingekoppelt und von dem ersten Modem (18A, 18B) zur Übertragung an die zentrale Steuerungseinrichtung (14) ausgekoppelt werden.

7. Verfahren nach Anspruch 6,
**dadurch gekennzeichnet,**
**dass** die Brenner-Betriebszustandsparameter den Ionisationsstrom einer Ionisationselektrode und/oder den Schaltungszustand einer den Druck in der Brennkammer des Brenners (6) erfassenden Druckdose und/oder den Schaltungszustand eines Ventils umfasst, über welches die Zufuhr von Brennstoff zum Brenner (6) frei geschaltet wird.

8. Verfahren nach einem der Ansprüche 6 oder 7,
**dadurch gekennzeichnet,**
**dass** die erfassten Brenner-Betriebszustandsparameter über eine mit der zentralen Steuerungseinrichtung (14) verbundene Datenschnittstelle (22) und ein externes Datennetzwerk und/oder ein Telefonnetzwerk zum Zwecke der Fernwartung abfragbar sind.

9. Anordnung zur Durchführung des Verfahrens nach einem der vorhergehenden Ansprüche, umfassend eine Vielzahl von Dunkelstrahler-Einheiten (2A1 bis 2A10 , 2B1 bis 2B10), von denen eine jede Dunkelstrahler-Einheit ein Strahlungsrohr (4) und einen Brenner (6) aufweist, der das Strahlungsrohr (4) mit Heißgas beaufschlagt, wobei jedem Brenner(6) eine eigene Brenner-Steuerungseinheit (8A1 bis 8A10, 8B1 bis 8B10) zugeordnet ist, die über eine jeweilige Stromzuleitung (10A, 10B) mit elektrischer Energie versorgt wird und die Brenner-Steuerungseinheiten (8A1 bis 8A10, 8B1 bis 8B10) zum Ein- und Ausschalten der jeweiligen Brenner (6) mit einer zentralen Steuerungseinrichtung (14) über einen Datenbus gekoppelt sind,
**dadurch gekennzeichnet,**
**dass** die Stromzuleitungen (10A,10B) zur Versorgung der Brenner-Steuereinheiten (8A1 bis 8A10, 8B1 bis 8B10) elektrisch mit einem gemeinsamen 50 Hz Wechselstromanschluss (11) verbunden sind, dass die zentrale Steuerungseinheit (14) mit einem ersten Modem (18A, 18B) verbunden ist, welches die von der zentralen Steuerungseinrichtung (14) zur Steuerung der Brenner-Steuerungseinheit (8A1 bis 8A10, 8B1 bis 8B10) generierten Steuerungssignale als Mittelfrequenz-Datensignale mit Frequenzen im Bereich von 90 bis 150 kHz in wenigstens eine der Stromzuleitungen einkoppelt, und dass jede der Brenner-Steuerungseinheiten (8A1 bis 8A10, 8B1 bis 8B10) ein eigenes weiteres Modem (20A1 bis 20A10, 20B1 bis 20B10) aufweist, über welches die Mittelfrequenz-Datensignale selektiv aus der Stromzuleitung (10A, 10B) ausgekoppelt und der Brenner-Steuerungseinheit (8A1 bis 8A10, 8B1 bis 8B10) zugeführt werden.

10. Anordnung nach Anspruch 9,
**dadurch gekennzeichnet,**
**dass** jede der Brenner-Steuerungseinheiten (8A1 bis 8A10, 8B1 bis 8B10) eine Erfassungseinrichtung zum Erfassen eines oder mehrerer Brenner-Betriebszustandsparameter des zugehörigen Brenners (6) aufweist, und dass die Brenner-Betriebszustandsparameter zusammen mit einem Brenner-Identifikationsparameter des zugehörigen Brenners (6) über die Stromzuleitungen (10A, 10B) als Mittelfrequenz-Datensignale an die zentrale Steuerungseinrichtung (14) übersandt werden.

11. Anordnung nach Anspruch 9 oder 10,
**dadurch gekennzeichnet,**
**dass** die Erfassungseinrichtung eine Anordnung zum Messen des Ionisationsstroms einer Ionisationselektrode und/oder einen Differenzdruckschalter zum Erfassen des Drucks in der Brennkammer des Brenners (6) und/oder einen Sensor zum Erfassen des Schaltungszustands eines Ventils umfasst, über welches die Zufuhr von Brennstoff zum Brenner (6) veränderbar ist.

12. Anordnung nach einem der Ansprüche 9 bis 11,
**dadurch gekennzeichnet,**
**dass** die zentrale Steuerungseinrichtung (14) zum Datenaustausch mit einer Datenschnittstelle (22) gekoppelt ist, und dass die Datenschnittstelle über einen HUB mit einer Datenleitung eines vom Datenbus unterschiedlichen weiteren Datenbusses verbindbar ist, über welchen weitere Brenner-Steuerungseinheiten einer weiteren Vielzahl von Dunkelstrahler-Einheiten (2A1 bis 2A10, 2B1 bis 2B10) ansteuerbar sind.

13. Anordnung nach einem der Ansprüche 9 bis 12,
**dadurch gekennzeichnet,dass**
die zentrale Steuerungseinrichtung (14) zur Unterdrückung von Störimpulsen über einen elektronischen Filter mit dem 50 Hz Wechselstromanschluss (11) verbunden ist.

## Claims

1. Method for controlling a heating arrangement (1) with a plurality of dark radiator units (2, 2A1 to 2A10, 2B1 to 2B10), of which each dark radiator unit (2, 2A1 to 2A10, 2B1 to 2B10) comprises a radiant tube (4), which can be charged by a burner (6) with hot gas, wherein each burner (6) possesses its own burner control unit (8A1 to 8A10, 8B1 to 8B10) capable of being supplied via a power supply line (10A, 10B) with electrical energy, which is coupled with a central control device (14) via a data bus for switching on and switching off the burner (6),
**characterised in that**,
the power supply lines (10A, 10B) for the supply of the burner control units (8A1 to 8A10, 8B1 to 8B10) are fed via a common 50 Hz AC-connection (11), and that the control signals for the control of every burner control unit (8A1 to 8A10, 8B1 to 8B10) are transmitted from the central control device (14) as mid-frequency data signals with frequencies in the range from 90 to 150 kHz via the power supply lines (10A, 10B) to the burner control units, wherein the central control device (14) couples the data signals for the control of the burner control unit (8A1 to 8A10, 8B1 to 8B10) via a first modem (18A, 18B) into at least one of the power supply lines (10A, 10B), and that each of the burner control units (8A1 to 8A10, 8B1 to 8B10) comprises its own further modem (20A1 to 20A10, 20B1 to 20B10), by means of which the mid-frequency data signals are selectively decoupled from the power supply line (10A, 10B) and supplied to the respective burner control unit (8A1 to 8A10, 8B1 to 8B10).

2. Method according to claim 1,
**characterised in that**,
the mid-frequency data signals are coupled into the neutral conductor (N) and a non-live wire (Com1, Com2) of the power supply line (10A, 10B) leading from the central control unit (14) to the burner control units (8A1 to 8A10, 8B1 to 8B10).

3. Method according to claim 2,
**characterised in that**,
two or more groups (2A, 2B) of up to 10 burner control units (8A1 to 8A10, 8B1 to 8B10) are connected via a line branch to the 50 Hz AC-connection, and that each group (2A, 2B) is controlled separately through its own first modem (18A, 18B) connected to the central control device (14), which couples the mid-frequency data signals into the neutral
conductor (N) and the non-live wire (Com1, Com2) of the respective line branch.

4. Method according to one of claims 1 to 3,
**characterised in that**,
a burner identification parameter is associated with each of the burner control units (8A1 to 8A10, 8B1 to 8B10), and that the burner control units and/or further modems (20A1 to 20A10, 20B1 to 20B10) select the mid-frequency data signals generated by the central control device (14) on the basis of the burner identification parameters, in order to filter out from the mid-frequency data signals the mid-frequency data signals determined for them.

5. Method according to claim 4,
**characterised in that**,
the burner identification parameter comprises a serial number stored in a buffer of the burner control unit (8A1 to 8A10, 8B1 to 8B10), which is transferred automatically to the central control device in the case of a first-time connection of the burner control unit to the central control device (14).

6. Method according to one of the preceding claims,
**characterised in that**,
each of the burner control units (8A1 to 8A10, 8B1 to 8B10) comprises a registration device for registering one or more burner operating status parameters of the associated burner, and that the burner operating status parameters of every burner control unit (8A1 to 8A10, 8B1 to 8B10) are transferred together with the associated burner identification parameter of the associated burner control unit (8A1 to 8A10, 8B1 to 8B10) via the power supply lines (10A, 10B) as mid-frequency data signals to the central control device (14), and that the burner operating status parameters registered from one burner control unit ((8A1 to 8A10, 8B1 to 8B10) together with the associated burner identification parameters are coupled via the further modem (20A1 to 20A10, 20B1 to 20B10) associated with the burner control unit ((8A1 to 8A10, 8B1 to 8B10) into the power supply line (10A, 10B) supplying the burner control unit (8A1 to 8A10, 8B1 to 8B10) with current and decoupled by the first modem (18A, 18B) for the transmission to the central control device (14).

7. Method according to claim 6,
**characterised in that**,
the burner operating status parameters comprises the ionisation current of an ionisation electrode and/or the switching status of a barometric cell registering the pressure in the combustion chamber of the burner (6) and/or the switching status of a valve, by means of which the supply of fuel to the burner (6) is released.

8. Method according to one of claims 6 or 7,
**characterised in that**,
the registered burner operating status parameters can be interrogated via a data interface (22) connected to the central control device (14) and an external data network and/or a telephone network for the purpose of remote maintenance.

9. Arrangement for the implementation of the method according to one of the preceding claims, comprising a plurality of dark radiator units (2A1 to 2A10, 2B1 to 2B10), of which each dark radiator unit comprises a radiant tube (4) and a burner (6), which charges the radiant tube (4) with hot gas, wherein its own burner control unit (8A1 to 8A10, 8B1 to 8B10) is associated with each burner (6), which is supplied via a respective power supply line (10A, 10B) with electrical energy, and the burner control units (8A1 to 8A10, 8B1 to 8B10) are coupled via a data bus with a central control device (14) for switching on and switching off the respective burners (6),
**characterised in that**,
the power supply lines (10A, 10B) are electrically connected for the supply of the burner control units (8A1 to 8A10, 8B1 to 8B10) with a common 50 Hz AC-connection (11), that the central control unit (14) is connected to a first modem (18A, 18B), which couples the control signals generated by the central control device (14) for the control of the burner control unit (8A1 to 8A10, 8B1 to 8B10) as mid-frequency data signals with frequencies in the range from 90 to 150 kHz into at least one of the power supply lines, and that each of the burner control units (8A1 to 8A10, 8B1 to 8B10) comprises its own further modem (20A1 to 20A10, 20B1 to 20B10), by means of which the mid-frequency data signals are selectively decoupled from the power supply line (10A, 10B) and supplied to the burner control unit (8A1 to 8A10, 8B1 to 8B10).

10. Arrangement according to claim 9,
**characterised in that**,
each of the burner control units (8A1 to 8A10, 8B1 to 8B10) comprises a registration device for registering one or more burner operating status parameters of the associated burner (6), and that the burner operating status parameters are transferred together with a
burner identification parameter of the associated burner (6) via the power supply lines (10A, 10B) as mid-frequency data signals to the central control device (14).

11. Arrangement according to claim 9 or 10,
**characterised in that**,
the registration device comprises an arrangement for measuring the ionisation current of an ionisation electrode and/or a differential pressure switch for registering the pressure in the combustion chamber of the burner (6) and/or a sensor for registering the switching status of a valve, by means of which the supply of fuel to the burner (6) can be varied.

12. Arrangement according to one of claims 9 to 11,
**characterised in that**,
for the data exchange, the central control device (14) is coupled with a data interface (22), and that the data interface can be connected via a HUB with a data line of a further data bus different from the data bus, by means of which further burner control units of a further plurality of dark radiator units (2A1 to 2A10, 2B1 to 2B10) can be controlled.

13. Arrangement according to one of claims 9 to 12,
**characterised in that**,
the central control device (14) is connected to the 50 Hz AC-connection (11) via an electronic filter for the suppression of interference pulses.

## Revendications

1. Procédé pour la commande d'une installation de chauffage (1) comprenant une pluralité d'unités de radiateurs obscurs (2, 2A1 à 2A10, 2B1 à 2B10) dont chacune des unités de radiateurs obscurs (2A1 à 2A10, 2B1 à 2B10) comprend un tube radiant (4) qui peut être alimenté en gaz chaud par un brûleur (6), chaque brûleur (6) possédant une unité de commande de brûleur propre (8A1 à 8A10, 8B1 à 8B10) pouvant être alimentée en énergie électrique par un conducteur de courant (10A, 10B) et étant couplée, pour la mise en marche et l'arrêt du brûleur (6), à un dispositif de commande central (14) par un bus de données,
**caractérisé en ce que**
les conducteurs de courant (10A, 10B) sont alimentés par une prise de courant alternatif à 50 Hz commune (11) pour l'alimentation des unités de commande de brûleur (8A1 à 8A10, 8B1 à 8B10), et **en ce que** les signaux de commande pour la commande de chaque unité de commande de brûleur (8A1 à 8A10, 8B1 à 8B10) à partir du dispositif de commande central (14) sont transmis aux unités de commande de brûleur sous forme de signaux de données à fréquence moyenne, avec des fréquences dans la plage allant de 90 à 150 kHz, par les conducteurs de courant (10A, 10B), le dispositif de commande central (14) injectant les signaux de données pour la commande de l'unité de commande de brûleur (8A1 à 8A10, 8B1 à 8B10) par l'intermédiaire d'un premier modem (18A, 18B) dans au moins un des conducteurs de courant (10A, 10B), et **en ce que** chacune des unités de commande de brûleur (8A1 à 8A10, 8B1 à 8B10) comprend un autre modem propre (20A1 à 20A10, 20B1 à 20B10) par l'intermédiaire duquel les signaux de données à fréquence moyenne sont découplés sélectivement du conducteur de courant (10A, 10B) et sont transmis à chaque unité de commande de brûleur (8A1 à 8A10, 8B1 à 8B10).

2. Procédé selon la revendication 1,
**caractérisé en ce que**
les signaux de données à fréquence moyenne sont injectés dans le conducteur neutre (N) et dans une âme ne conduisant pas le courant (Com1, Com2) du conducteur de courant (10A, 10B) conduisant du dispositif de commande central (14) aux unités de commande de brûleur (8A1 à 8A10, 8B1 à 8B10).

3. Procédé selon la revendication 2,
**caractérisé en ce que**
deux groupes (2A, 2B) ou plus de jusqu'à 10 unités de commande de brûleur (8A1 à 8A10, 8B1 à 8B10) sont reliés par un terne à la prise de courant alternatif à 50 Hz, et **en ce que** chaque groupe (2A, 2B) est commandé séparément par un premier modem propre (18A, 18B) relié au dispositif de commande central (14) et qui injecte les signaux de données à fréquence moyenne dans le conducteur neutre (N) et l'âme ne conduisant pas le courant (Com1, Com2) de chaque terne.

4. Procédé selon l'une des revendications 1 à 3,
**caractérisé en ce que**
à chacune des unités de commande de brûleur (8A1 à 8A10, 8B1 à 8B10) est associé un paramètre d'identification de brûleur, et **en ce que** les unités de commande de brûleur et/ou d'autres modems (20A1 à 20A10, 20B1 à 20B10) sélectionnent les signaux de données à fréquence moyenne produits par le dispositif de commande central (14) sur la base des paramètres d'identification de brûleur, pour extraire parmi les signaux de données à fréquence moyenne, les signaux de données à fréquence moyenne qui leur sont destinés.

5. Procédé selon la revendication 4,
caractérisé en ce-que
le paramètre d'identification de brûleur comprend un numéro de série enregistré dans une mémoire de l'unité de commande de brûleur (8A1 à 8A10, 8B1 à 8B10), qui est transmis automatiquement, lors d'une première connexion de l'unité de commande de brûleur au dispositif de commande central (14), au dispositif de commande central.

6. Procédé selon l'une des revendications précédentes,
**caractérisé en ce que**
chacune des unités de commande de brûleur (8A1 à 8A10, 8B1 à 8B10) comprend un dispositif d'acquisition pour l'acquisition d'un ou de plusieurs paramètres d'état de fonctionnement de brûleur du brûleur correspondant, et **en ce que** les paramètres d'état de fonctionnement de brûleur de chaque unité de commande de brûleur (8A1 à 8A10, 8B1 à 8B10), conjointement avec le paramètre d'identification de brûleur correspondant de l'unité de commande de brûleur (8A1 à 8A10, 8B1 à 8B10) correspondante, sont transmis par les conducteurs de courant (10A, 10B), sous forme de signaux de données à fréquence moyenne, au dispositif de commande central (14), et **en ce que** les paramètres d'état de fonctionnement de brûleur acquis par une unité de commande de brûleur (8A1 à 8A10, 8B1 à 8B10), conjointement avec les paramètres d'identification de brûleur correspondants, sont injectés par l'autre modem (20A1 à 20A10, 20B1 à 20B10) associé à l'unité de commande de brûleur (8A1 à 8A10, 8B1 à 8B10) dans le conducteur de courant (10A, 10B) alimentant en courant l'unité de commande de brûleur (8A1 à 8A10, 8B1 à 8B10), et sont découplés du premier modem (18A, 18B) pour la transmission au dispositif de commande central (14).

7. Procédé selon la revendication 6,
**caractérisé en ce que**
les paramètres d'état de fonctionnement de brûleur comprennent le courant d'ionisation d'une électrode d'ionisation et/ou l'état de circuit d'une capsule de pression acquérant la pression dans la chambre de combustion du brûleur (6) et/ou l'état de circuit d'une soupape, par l'intermédiaire de laquelle l'amenée du combustible au brûleur (6) est autorisée.

8. Procédé selon l'une des revendications 6 ou 7,
**caractérisé en ce que**
les paramètres d'état de fonctionnement de brûleur acquis peuvent être interrogés par l'intermédiaire d'une interface de données (22) reliée au dispositif de commande central (14) et d'un réseau de données externe et/ou d'un réseau téléphonique dans un but de télémaintenance.

9. Dispositif pour la mise en oeuvre du procédé selon l'une des revendications précédentes, comprenant une pluralité d'unités de radiateurs obscurs (2A1 à 2A10, 2B1 à 2B10) dont chaque unité de radiateurs obscurs comprend un tube radiant (4) et un brûleur (6) qui alimente le tube radiant (4) en gaz chaud, chaque brûleur (6) étant associé à une unité de commande de brûleur propre (8A1 à 8A10, 8B1 à 8B10) qui est alimentée chacune en énergie électrique par un conducteur de courant (10A, 10B) et les unités de commande de brûleur (8A1 à 8A10, 8B1 à 8B10) étant couplées, pour la mise en marche et l'arrêt de chaque brûleur (6), à un dispositif de commande central (14) par un bus de données,
**caractérisé en ce que**
les conducteurs de courant (10A, 10B) sont reliés électriquement à une prise de courant alternatif à 50 Hz commune (11) pour l'alimentation des unités de commande de brûleur (8A1 à 8A10, 8B1 à 8B10), **en ce que** le dispositif de commande central (14) est relié à un premier modem (18A, 18B), lequel injecte dans au moins un des conducteurs de courant les signaux de commande engendrés par le dispositif de commande central (14) pour la commande de l'unité de commande de brûleur (8A1 à 8A10, 8B1 à 8B10) sous forme de signaux de données à fréquence moyenne avec des fréquences dans la plage allant de 90 à 150 kHz, et **en ce que** chacune des unités de commande de brûleur (8A1 à 8A10, 8B1 à 8B10) comprend un autre modem propre (20A1 à 20A10, 20B1 à 20B10) par l'intermédiaire duquel les signaux de données à fréquence moyenne sont découplés sélectivement du conducteur de courant (10A, 10B) et sont transmis à l'unité de commande de brûleur (8A1 à 8A10, 8B1 à 8B10).

10. Dispositif selon la revendication 9,
**caractérisé en ce que**
chacune des unités de commande de brûleur (8A1 à 8A10, 8B1 à 8B10) comprend un dispositif d'acquisition pour l'acquisition d'un ou de plusieurs paramètres d'état de fonctionnement de brûleur du brûleur correspondant (6), et **en ce que** les paramètres d'état de fonctionnement de brûleur, conjointement avec un paramètre d'identification de brûleur du brûleur correspondant (6), sont transmis par les conducteurs de courant (10A, 10B) sous forme de signaux de données à fréquence moyenne au dispositif de commande central (14).

11. Dispositif selon la revendication 9 ou 10,
**caractérisé en ce que**
le dispositif d'acquisition comprend un dispositif pour la mesure du courant d'ionisation d'une électrode d'ionisation et/ou un circuit à pression différentielle pour l'acquisition de la pression dans la chambre de combustion du brûleur (6), et/ou un détecteur pour l'acquisition de l'état de circuit d'une soupape, grâce auquel l'alimentation en combustible du brûleur (6) peut être modifiée.

12. Dispositif selon l'une des revendications 9 à 11,
**caractérisé en ce que**
le dispositif de commande central (14) est couplé à une interface de données (22) pour l'échange de données, et **en ce que** l'interface de données peut être reliée par un HUB à un conducteur de données d'un parmi d'autres bus de données différents du bus de données, par l'intermédiaire desquels d'autres unités de commande de brûleur d'une autre pluralité d'unités de radiateurs obscurs (2A1 à 2A10, 2B1 à 2B10) peuvent être commandées.

13. Dispositif selon l'une des revendications 9 à 12,
**caractérisé en ce que**
le dispositif de commande central (14) est relié à la prise de courant alternatif à 50 Hz (11) par l'intermédiaire d'un filtre électronique pour la suppression d'impulsions parasites.
